# EUROPÄISCHE PATENTSCHRIFT

(11) **EP 3 384 746 B1**
(45) Veröffentlichungstag und Bekanntmachung des Hinweises auf die Patenterteilung: **13.09.2023**
(21) Anmeldenummer: 18165627.3
(22) Anmeldetag: 04.04.2018
(51) Int. Cl.: A01B 63/114, B62D 49/08, A01B 76/00, B60C 23/00, A01B 63/14

(54) **VERFAHREN ZUR BEREITSTELLUNG EINES BALLASTIERUNGSVORSCHLAGS EINES LANDWIRTSCHAFTLICHEN TRAKTORS**
METHOD FOR PROVIDING A BALLAST PROPOSAL FOR AN AGRICULTURAL TRACTOR
PROCÉDÉ POUR FOURNIR UNE PROPOSITION DE CONTREPOIDS POUR UN TRACTEUR AGRICOLE

(30) Priorität: 05.04.2017 DE 102017205827
(43) Veröffentlichungstag der Anmeldung: 10.10.2018
(73) Patentinhaber: Deere & Company, Moline, IL 61265 (US)
(72) Erfinder: Schott, Florian, 68163 Mannheim (DE); Reinmuth, Florian, 68163 Mannheim (DE)
(74) Vertreter: Dehnhardt, Florian Christopher

(56) Entgegenhaltungen:
- EP-A1- 2 583 543
- WO-A1-2016/045868
- US-A1- 2016 016 470
- PRANAV P K ET AL: "Computer simulation of ballast management for agricultural tractors", JOURNAL OF TERRAMECHANICS, ELSEVIER, AMSTERDAM, NL, Bd. 45, Nr. 6, 1. Dezember 2008 (2008-12-01), Seiten 185-192, XP025967304, ISSN: 0022-4898, DOI: 10.1016/J.JTERRA.2008.12.002 [gefunden am 2009-01-29]

## Beschreibung

Die Erfindung betrifft ein Verfahren zur Bereitstellung eines Ballastierungsvorschlags eines landwirtschaftlichen Traktors.

Die korrekte Ballastierung eines landwirtschaftlichen Traktors je nach daran angebrachtem Anbaugerät ist nur mit entsprechender Erfahrung möglich. So benötigt der Nutzer nicht nur Informationen hinsichtlich Masse und Schwerpunktlage des Anbaugeräts, sondern muss auch in der Lage sein, deren Auswirkung auf die Achslasten bzw. Achslastverteilung des landwirtschaftlichen Traktors abzuschätzen. Hinzu kommen schwer einzuschätzende Einflüsse seitens des zu bearbeitenden Bodens, die bei Verwendung bodeneingreifender Arbeitsgeräte je nach Bodenbeschaffenheit zu einer dynamischen Verschiebung der Achslasten führen, einschließlich der Bodenbearbeitungsgeschwindigkeit, mit der das Anbaugerät über bzw. durch den Erdboden gezogen wird. Das Dokument WO2016045868 offenbart ein bekanntes Ballastierungsverfahren.

Es ist daher Aufgabe der vorliegenden Erfindung, ein Verfahren der eingangs genannten Art dahingehend auszubilden, dass dieses einen Nutzer eines landwirtschaftlichen Traktors bei der Beurteilung der korrekten Ballastierung unterstützt.

Diese Aufgabe wird durch ein Verfahren zur Bereitstellung eines Ballastierungsvorschlags eines landwirtschaftlichen Traktors mit den Merkmalen des Patentanspruchs 1 gelöst.

Bei dem erfindungsgemäßen Verfahren zur Bereitstellung eines Ballastierungsvorschlags eines landwirtschaftlichen Traktors wird zunächst für jede der Achsen des landwirtschaftlichen Traktors unter Berücksichtigung einer spezifischen Bodenbearbeitungsgeschwindigkeit des ausgewählten Anbaugeräts eine für ein ausgewähltes Anbaugerät spezifische Sollzugleistung durch multiplikative Verknüpfung einer zum Betreiben des ausgewählten Anbaugeräts erforderlichen Sollzugkraft mit der spezifischen Bearbeitungsgeschwindigkeit berechnet, wobei für die erforderliche Sollzugkraft ein für das jeweils ausgewählte Anbaugerät charakteristischer Ausgangswert festgelegt wird, der nach Maßgabe von Angaben bezüglich der Bodenbeschaffenheit und/oder topografischer Eigenschaften einschließlich eines topografischen Verlaufs modifiziert wird. Anschließend wird in Abhängigkeit der berechneten Sollzugleistung ein an der betreffenden Achse einzuhaltender Sollwert für eine Achslast abgeleitet und mit einem für die Achslast ermittelten Istwert verglichen, wobei ausgehend von dem Vergleichsergebnis eine zur Einhaltung des Sollwerts erforderliche achsweise Ballastierung berechnet und in Gestalt eines zugehörigen Ballastierungsvorschlags ausgegeben wird.

Die spezifische Sollzugleistung stellt diejenige vom landwirtschaftlichen Traktor auf den Erdboden zu übertragende Antriebsleistung dar, die nach Maßgabe des ausgewählten Anbaugeräts zur optimalen Durchführung einer zugeordneten Bodenbearbeitungsfunktion an der betreffenden Achse aufzubringen ist. Aus der spezifischen Sollzugleistung lässt sich wiederum unter Zugrundelegung des als bekannt vorausgesetzten Traktionsvermögens zugehöriger Reifen für jede der Achsen des landwirtschaftlichen Traktors eine zur Übertragung der entsprechenden Antriebsleistung erforderliche Aufstandskraft und daraus unmittelbar der an der betreffenden Achse insoweit für die Achslast einzuhaltende Sollwert ableiten. Der durch Vergleich mit dem Istwert der Achslast gewonnene Ballastierungsvorschlag kann dann vom Nutzer durch Anbringen bzw. Abnehmen entsprechender Zusatzgewichte (z.B. Radzusatzgewichte, Front- bzw. Heckgewichte) ohne Weiteres umgesetzt werden, wobei sich bereits angebrachte Zusatzgewichte im Rahmen des Ballastierungsvorschlags mitberücksichtigen lassen, da letztere ihren Eingang in den für die Achslast ermittelten Istwert finden können. Bezüglich des als bekannt vorausgesetzten Traktionsvermögens der Reifen kann ein fester, für das betreffende Reifenmodell charakteristischer Wert vorgegeben sein, es besteht jedoch auch die Möglichkeit, das tatsächliche Traktionsvermögen in Abhängigkeit eines aktuellen Reifendrucks sowie des verwendeten Reifenmodells abzuleiten und der Berechnung des Sollwerts der Achslast entsprechend zugrunde zu legen. Hierbei kann der Reifendruck bzw. das Reifenmodell seitens eines in einen Reifenmantel eingebetteten RFID-Sensors in Gestalt entsprechender Fülldruck- bzw. Identifikationsinformationen bereitgestellt werden, wobei diese mittels eines RFID-Lesegeräts drahtlos an eine mikroprozessorgesteuerte Kontrolleinheit übertragen werden, die das erfindungsgemäße Verfahren auf Grundlage einer entsprechenden Software ausführt. Alternativ erfolgt die drahtlose Übertragung der von einem Reifensensor bereitgestellten Fülldruck- bzw. Identifikationsinformationen nach dem Bluetooth-Standard, wozu die Kontrolleinheit eine entsprechende Bluetooth-Schnittstelle aufweist. Neben einer sensorischen Bereitstellung ist zudem die Möglichkeit einer manuellen Eingabe des Reifendrucks bzw. des Reifenmodells über eine mit der Kontrolleinheit in Verbindung stehende grafische Nutzerschnittstelle denkbar. Die grafische Nutzerschnittstelle kann eine berührungsempfindliche Bedien- und Anzeigeoberfläche umfassen und ist beispielsweise an der A-Säule innerhalb einer von dem landwirtschaftlichen Traktor umfassten Fahrerkabine montiert. Zusätzlich oder alternativ kann es sich auch um ein mobiles Dateneingabegerät, insbesondere einen Tablet-Computer oder dergleichen, handeln, der über eine drahtlose Datenübertragungstrecke (z.B. nach dem Bluetooth-, WLAN- oder LTE-Standard) mit der Kontrolleinheit kommuniziert.

Vorteilhafte Weiterbildungen des erfindungsgemäßen Verfahrens gehen aus den Unteransprüchen hervor.

Erfindungsgemäß wird die Sollzugleistung unter Berücksichtigung einer spezifischen Bodenbearbeitungsgeschwindigkeit des ausgewählten Anbaugeräts berechnet. Dies ist gerade bei bodeneingreifenden Anbaugeräten von Vorteil, da sich der beim Bearbeiten des Erdbodens geschwindigkeitsabhängig entgegengesetzte Widerstand im Sinne einer präzisen Berechnung der Sollzugleistung einbeziehen lässt. Bei den bodeneingreifenden Anbaugeräten kann es sich um Pflüge, Eggen, Sämaschinen, Kreiselschwader oder dergleichen handeln.

Die spezifische Bodenbearbeitungsgeschwindigkeit ergibt sich im Allgemeinen aus entsprechenden Vorgaben des Anbaugeräteherstellers und kann entweder durch direkte numerische Eingabe über die grafische Nutzerschnittstelle oder aber selbsttätig anhand des jeweils ausgewählten Anbaugeräts vorgegeben werden. In letzterem Fall kann ein dem Anbaugerät zugeordnetes Identifikationsmittel vorgesehen sein. Das Identifikationsmittel kann einen an dem Anbaugerät angebrachten RFID-Identifikator umfassen, der unter anderem Angaben hinsichtlich des Anbaugerätemodells enthält. Die betreffenden Angaben können mittels des RFID-Lesegeräts drahtlos ausgelesen sowie an die Kontrolleinheit übertragen werden, wobei die Kontrolleinheit ausgehend von dem identifizierten Anbaugerätemodell die zugehörige spezifische Bodenbearbeitungsgeschwindigkeit aus einer in einem Datenspeicher hinterlegten Anbaugerätedatenbank auswählt. Abgesehen davon kann das Identifikationsmittel auch zur drahtlosen Datenübertragung entsprechend dem Bluetooth-Standard ausgebildet sein. Im Falle eines ISOBUS-basierten Anbaugeräts lassen sich die Angaben hinsichtlich des Anbaugerätemodells zudem über eine ISOBUS-Schnittstelle des landwirtschaftlichen Traktors auslesen.

Hierbei wird die Sollzugleistung auf Grundlage einer zum Betreiben des ausgewählten Anbaugeräts erforderlichen Sollzugkraft berechnet werden, wozu die Sollzugkraft mit der spezifischen Bearbeitungsgeschwindigkeit des betreffenden Anbaugeräts von der Kontrolleinheit multiplikativ verknüpft wird.

Für die erforderliche Sollzugkraft wird typischerweise ein für das jeweils ausgewählte Anbaugerät charakteristischer Ausgangswert festgelegt. Der Ausgangswert kann entweder durch direkte numerische Eingabe über die grafische Nutzerschnittstelle oder aber selbsttätig anhand des jeweils ausgewählten Anbaugeräts angesetzt werden. Hierbei kann das dem Anbaugerät zugeordnete Identifikationsmittel Verwendung finden, wobei die Kontrolleinheit ausgehend von dem identifizierten Anbaugerätemodell die zugehörige Sollzugkraft aus der in dem Datenspeicher hinterlegten Anbaugerätedatenbank auswählt.

Zur redundanten Festlegung des Ausgangswerts kann eine Kategorisierung in Relation zur maximal zur Verfügung stehenden Zugkraft des landwirtschaftlichen Traktors durchgeführt werden, was zumindest eine grobe Abschätzung bei der Festlegung des Ausgangswerts erlaubt, sofern weitergehende Informationen hinsichtlich des ausgewählten Anbaugeräts bzw. der zum Betreiben erforderlichen Sollzugkraft nicht zur Verfügung stehen. Eine Übersicht über beispielhafte Kategorien gibt die nachfolgende Tabelle.

| Kategorie | Bezeichnung | Ausgangswert der Sollzugkraft |
|---|---|---|
| 1 | None | 0% vom Maximum |
| 2 | Low | 30% vom Maximum |
| 3 | Medium | 60% vom Maximum |
| 4 | High | 90% vom Maximum |

Die gewünschte Kategorie ist hierbei über die grafische Nutzerschnittstelle manuell auswählbar.

Der festgelegte Ausgangswert wird anschließend nach Maßgabe von Angaben bezüglich der Bodenbeschaffenheit und der topografischer Eigenschaften einschließlich eines topografischen Verlaufs modifiziert. Der festgelegt Ausgangswert kann zudem nach Maßgaben von Angaben bezüglich einer für einen aktuellen Betriebszustand des landwirtschaftlichen Traktors optimalen Achslastverteilung modifiziert werden. In diesem Fall lässt sich der dem Anbaugerät beim Bearbeiten des Erdbodens entgegengesetzte Widerstand hinsichtlich der Berechnung der Sollzugleistung dahingehend präziseren, ob die Bodenbeschaffenheit lehmig, weich, hart, steinig oder sandig ist, oder ob das Gelände einen ebenen, (steil) abschüssigen, (steil) ansteigenden oder welligen topografischen Verlauf aufweist, wohingegen die Einbeziehung der für einen bestimmten Betriebszustand optimalen Achslastverteilung sicherstellt, dass der landwirtschaftliche Traktor ein stabiles Fahrverhalten aufweist.

Dabei besteht die Möglichkeit, dass die für den aktuellen Betriebszustand des landwirtschaftlichen Traktors optimale Achslastverteilung hinsichtlich eines beabsichtigten Straßen- oder Feldbetriebs, eines Antriebstyps des landwirtschaftlichen Traktors und/oder eines Kupplungstyps einer zur Anbringung des ausgewählten Anbaugeräts vorgesehenen Anbaugerätekupplung angepasst wird.

So ändert sich der Anlenk- bzw. Hebelpunkt des Anbaugeräts gegenüber dem landwirtschaftlichen Traktor je nach verwendetem Kupplungstyp, was entsprechende Auswirkungen auf die optimale Achslastverteilung der landwirtschaftlichen Traktors hat. Auch im Falle einer Straßenfahrt auf befestigtem Untergrund oder Asphalt ergeben sich bezüglich der optimalen Achslastverteilung andere Anforderungen als während der Bearbeitung eines Felds. Hinsichtlich des Antriebstyps ist zudem zwischen landwirtschaftlichen Traktoren mit permanentem Zweiradantrieb (2WD), zuschaltbarem Allradantrieb (MFWD) und Allradantrieb unter Verwendung gleichgroßer Reifen (4WD) zu unterscheiden. Eine Übersicht über die insofern vorgesehenen optimalen Achslastverteilungen für einen zweiachsigen landwirtschaftlichen Traktor gibt die nachfolgende Tabelle.

| Antriebstyp | Kupplungstyp | | | | | |
|---|---|---|---|---|---|---|
| | Kategorie A | | Kategorie B | | Kategorie C | |
| | Vorne | Hinten | Vorne | Hinten | Vorne | Hinten |
| 2WD | 25% | 75% | 30% | 70% | 35% | 65% |
| MFWD | 35% | 65% | 35% | 65% | 40% | 60% |
| 4WD | 55% | 45% | 55% | 45% | 60% | 40% |

Hierbei bezeichnet ein Kupplungstyp der Kategorie A ein Kupplungsmaul, eine Kupplungskugel (K50/K80) oder ein Zugpendel, ein Kupplungstyp der Kategorie B eine Zweipunktkupplung, und ein Kupplungstyp der Kategorie C eine Dreipunktkupplung in Gestalt eines Dreipunkt-Krafthebers.

Im Falle eines Straßenbetriebs werden die vorstehenden Achslastverteilungen zudem gegebenenfalls derart abgewandelt, dass einer vorderen Achse jeweils ein Anteil an der optimalen Achslastverteilung von 20% bis 25% zukommt, wobei ein Wert von 25% als ideal anzusehen ist.

Der Istwert der Achslast kann auf Grundlage einer an der Anbaugerätekupplung durch sensorische Erfassung der Kraft- und Hebelverhältnisse abgeleiteten Masse und/oder Schwerpunktlage des Anbaugeräts ermittelt werden. Für den Fall einer als Dreipunkt-Kraftheber ausgebildeten Anbaugerätekupplung sei diesbezüglich auf das in DE 10 2016 207 205 A1 beschriebene Verfahren hingewiesen. Zur Ermittlung des jeweiligen Istwerts der Achslast ist dann noch die Kenntnis der Masse und/oder Schwerpunktlage des landwirtschaftlichen Traktors notwendig. Die entsprechenden Angaben sind für das betreffende Traktormodell fest vorgegeben und in Form eines zugehörigen Traktordatensatzes in dem Datenspeicher hinterlegt. Zusätzlich besteht die Möglichkeit, diese über die grafische Nutzerschnittstelle zum Zweck der Berücksichtigung bereits angebrachter Zusatzgewichte anzupassen.

Auch ist es möglich, dass der Istwert der Achslast redundant auf Grundlage einer typspezifischen, mithin fest vorgegebenen Masse und/oder Schwerpunktlage des Anbaugeräts unter Einbeziehung der für das ausgewählte Anbaugerät spezifischen Sollzugleistung ermittelt wird. Die Ermittlung des Istwerts der Achslast erfolgt auch hier unter Einbeziehung der für das betreffende Traktormodell fest vorgegebenen Masse und/der Schwerpunktlage des landwirtschaftlichen Traktors, wobei die entsprechenden Angaben dem in dem Datenspeicher hinterlegten Traktordatensatz entnommen werden.

Genauer gesagt kann zunächst in Abhängigkeit der fest vorgegebenen Masse und/oder Schwerpunktlage des landwirtschaftlichen Traktors für jede der Achsen ein Ausgangswert der Achslast für den Fall eines Straßen- sowie eines Feldbetriebs bei angebrachtem Anbaugerät bestimmt werden. Ausgehend von diesem statischen Ausgangswert kann unter Einbeziehung der für das ausgewählte Anbaugerät spezifischen Sollzugleistung eine dynamische Verschiebung des statischen Ausgangswert ermittelt werden. Der solchermaßen gewonnene Ausgangswert bildet dann den Istwert der Achslast an der betreffenden Achse.

Abgesehen von den vorstehend wiedergegebenen Vorgehensweisen ist auch eine direkte Ermittlung des Istwerts der Achslast mittels eines an der betreffenden Achse des landwirtschaftlichen Traktors vorgesehenen Kraftmesslagers oder dergleichen vorstellbar.

Erfolgt eine redundante Ermittlung der Istwerte der Achslast, so besteht die Möglichkeit, dass eine Plausibilitätsprüfung durchgeführt wird, wobei eine Fehlermeldung ausgegeben wird, sofern die Plausibilitätsprüfung das Vorliegen einer unzulässigen Abweichung zwischen den für die Achslast ermittelten Istwerten ergibt. Dies ist bevorzugt dann der Fall, wenn die Abweichung einer Massedifferenz von mehr als 100 kg entspricht.

Des Weiteren kann die Ausgabe des Ballastierungsvorschlags - soweit dies im Rahmen der zulässigen Höchstachslasten möglich ist - im Sinne der gleichzeitigen Einhaltung der für den aktuellen Betriebszustand des landwirtschaftlichen Traktors optimalen Achslastverteilung modifiziert werden. Die für den aktuellen Betriebszustand des landwirtschaftlichen Traktors optimale Achslastverteilung ergibt sich auch hier aus einem beabsichtigten Straßen- oder Feldbetrieb, dem Antriebstyp des landwirtschaftlichen Traktors und/oder des Kupplungstyps der zur Anbringung des ausgewählten Anbaugeräts vorgesehenen Anbaugerätekupplung.

Eine mögliche Anwendung sieht vor, dass eine Reifendruckempfehlung in Abhängigkeit von sich unter Berücksichtigung des Ballastierungsvorschlags ergebenden Achslasten ausgegeben wird. So ist der Reifendruck bei zunehmender Achslast erfahrungsgemäß zu erhöhen, um eine gleichbleibende Reifenaufstandsfläche insbesondere bei der Bearbeitung eines Felds zu gewährleisten. Hierbei kann die Reifendruckempfehlung zusätzlich in Abhängigkeit eines beabsichtigten Straßen- oder Feldbetriebs angepasst werden.

Dies kann besonders komfortabel derart erfolgen, dass eine Reifenfüllanlage automatisiert in Abhängigkeit der ausgegebenen Reifendruckempfehlung angesteuert wird.

Das erfindungsgemäße Verfahren wird im Folgenden anhand der beigefügten Zeichnungen näher erläutert. Es zeigen:
- Fig. 1: ein Ausführungsbeispiel einer schematisch dargestellten Vorrichtung zur Durchführung des erfindungsgemäßen Verfahrens, und
- Fig. 2: ein Ausführungsbeispiel des erfindungsgemäßen Verfahrens in Gestalt eines Flussdiagramms.

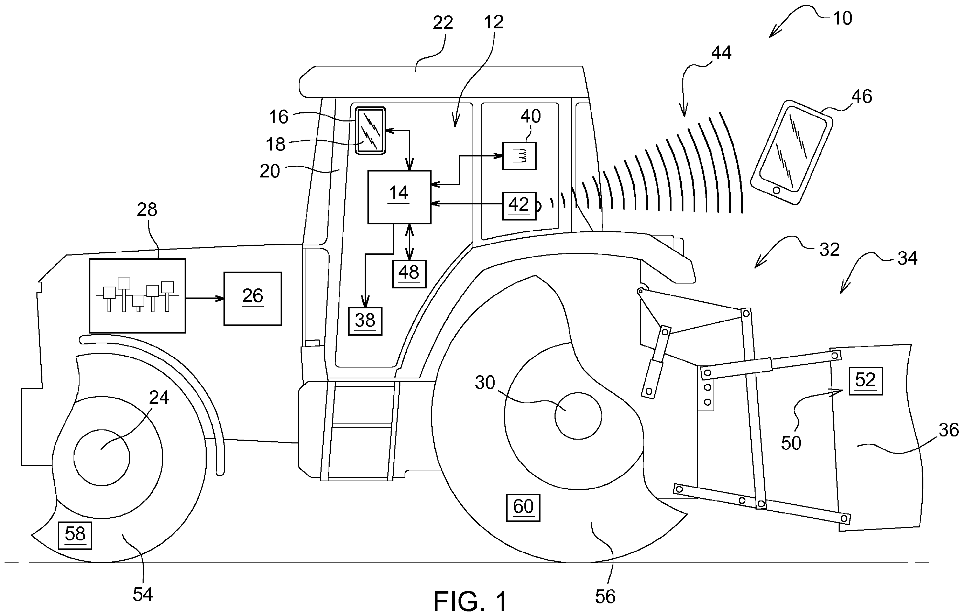

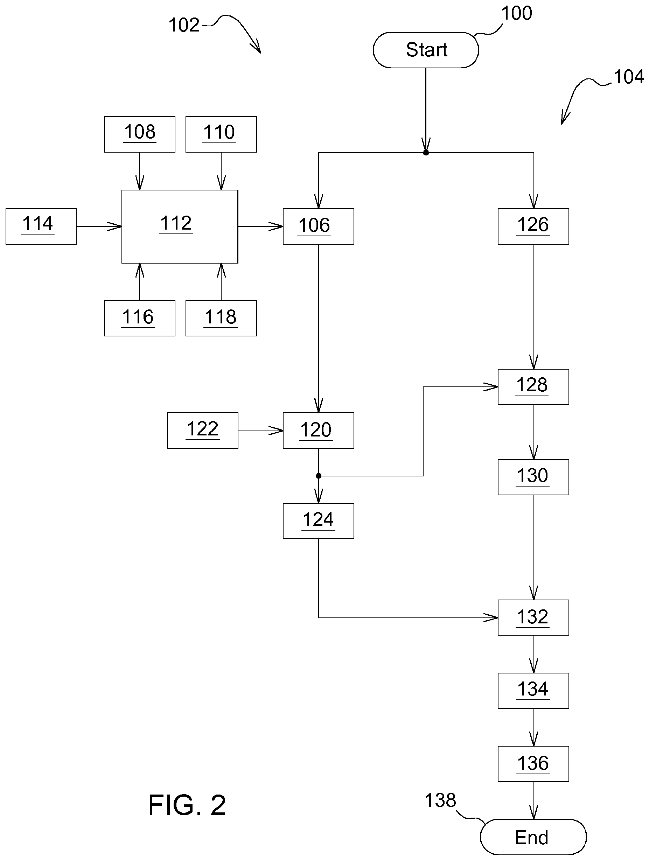

Fig. 1 zeigt ein Ausführungsbeispiel einer schematisch dargestellten Vorrichtung zur Durchführung des in Fig. 2 in Gestalt eines Flussdiagramms veranschaulichten erfindungsgemäßen Verfahrens.

Die in einem landwirtschaftlichen Traktor 10 untergebrachte Vorrichtung 12 umfasst eine mikroprozessorgesteuerte Kontrolleinheit 14, die mit einer grafischen Nutzerschnittstelle 16 in Verbindung steht. Die grafische Nutzerschnittstelle 16 umfasst eine berührungsempfindliche Bedien- und Anzeigeoberfläche 18 und ist beispielsgemäß an der A-Säule 20 innerhalb einer von dem landwirtschaftlichen Traktor 10 umfassten Fahrerkabine 22 montiert.

Der landwirtschaftliche Traktor 10 selbst ist von konventioneller Bauart und umfasst eine lenkbare vordere Achse 24 und eine über ein Fahrzeuggetriebe 26 mit einem Dieselmotor 28 in Verbindung stehende hintere Achse 30. Eine im Heckbereich 32 vorgesehene Anbaugerätekupplung 34 dient der Anbringung eines zugehörigen Anbaugeräts 36. Eine von der Kontrolleinheit 14 ansteuerbare Reifenfüllanlage 38 erlaubt eine rad- bzw. achsindividuelle Anpassung des Reifendrucks.

Die Kontrolleinheit 14 kommuniziert mit einem RFID-Lesegerät 40 und einer Schnittstelle 42 zur Herstellung einer drahtlosen Datenaustauschverbindung 44 mit einem mobilen Dateneingabegerät 46 in Gestalt eines Tablet-Computers. Die drahtlose Datenaustauschverbindung 44 beruht hierbei auf dem WLAN-Standard, kann aber auch Bluetooth- oder LTE-basiert sein.

Des Weiteren ist ein mit der Kontrolleinheit 14 verbundener Datenspeicher 48 vorhanden.

Das von der Kontrolleinheit 14 ausgeführte erfindungsgemäße Verfahren soll nun unter Bezugnahme auf Fig. 2 im Detail beschrieben werden. Das erfindungsgemäße Verfahren wird hierbei von der Kontrolleinheit 14 auf Grundlage einer entsprechenden Software ausgeführt. Diese ist in Form eines zugehörigen Software-Codes in dem Datenspeicher 48 hinterlegt und wird bei Inbetriebnahme des landwirtschaftlichen Traktors 10 in die Kontrolleinheit 14 bzw. einen von dieser umfassten Arbeitsspeicher geladen.

Hierbei wird das erfindungsgemäße Verfahren in einem Initialisierungsschritt 100 gestartet, wobei zwischen einem ersten und einem zweiten Verfahrenszweig 102, 104 zu unterscheiden ist. Die beiden Verfahrenszweige 102, 104 dienen der achsweisen Ermittlung eines eine aktuelle Achslast wiedergebenden Istwerts und eines von der Achslast einzuhaltenden Sollwerts.

### Ermittlung des Sollwerts der Achslast

Zunächst soll auf die im ersten Verfahrenszweig 102 durchgeführte Ermittlung des von der Achslast einzuhaltenden Sollwerts eingegangen werden.

In einem ersten Hauptschritt 106 wird für jede der beiden Achsen 24, 30 des landwirtschaftlichen Traktors 10 eine für das ausgewählte Anbaugerät 36 spezifische Sollzugleistung berechnet.

Die spezifische Sollzugleistung stellt diejenige vom landwirtschaftlichen Traktor 10 auf den Erdboden zu übertragende Antriebsleitung dar, die nach Maßgabe des ausgewählten Anbaugeräts 36 zur optimalen Durchführung einer zugeordneten Bodenbearbeitungsfunktion an der betreffenden Achse 24, 20 aufzubringen ist. Die spezifische Sollzugleistung wird auf Grundlage einer zum Betreiben des ausgewählten Anbaugeräts 36 erforderlichen Sollzugkraft berechnet.

Für die erforderliche Sollzugkraft wird ein für das betreffende Anbaugerät 36 charakteristischer Ausgangswert festgelegt. Der Ausgangswert wird in einem ersten Nebenschritt 108 durch direkte numerische Eingabe über die grafische Nutzerschnittstelle 16 oder aber selbsttätig anhand des jeweils ausgewählten Anbaugeräts 36 angesetzt. In letzterem Fall findet ein dem betreffenden Anbaugerät 36 zugeordnetes Identifikationsmittel 50 gemäß Fig. 1 Verwendung. Das Identifikationsmittel 50 umfasst einen an dem Anbaugerät 36 angebrachten RFID-Identifikator 52, der unter anderem Angaben hinsichtlich des Anbaugerätemodells enthält. Die betreffenden Angaben werden mittels des RFID-Lesegeräts 40 drahtlos ausgelesen sowie an die Kontrolleinheit 14 übertragen, wobei die Kontrolleinheit 14 ausgehend von dem identifizierten Anbaugerätemodell die zugehörige Sollzugkraft aus einer in dem Datenspeicher 48 hinterlegten Anbaugerätedatenbank auswählt.

Zur redundanten Festlegung des Ausgangswerts erfolgt in einem zweiten Nebenschritt 110 dessen Kategorisierung in Relation zur maximal zur Verfügung stehenden Zugkraft des landwirtschaftlichen Traktors 10, was zumindest eine grobe Abschätzung und Festlegung des Ausgangswerts erlaubt, sofern weitergehende Informationen hinsichtlich des ausgewählten Anbaugeräts 36 bzw. der zum Betreiben erforderlichen Sollzugkraft nicht zur Verfügung stehen. Eine Übersicht über beispielhafte Kategorien gibt die nachfolgende Tabelle.

| Kategorie | Bezeichnung | Ausgangswert der Sollzugkraft |
|---|---|---|
| 1 | None | 0% vom Maximum |
| 2 | Low | 30% vom Maximum |
| 3 | Medium | 60% vom Maximum |
| 4 | High | 90% vom Maximum |

Die gewünschte Kategorie ist hierbei über die grafische Nutzerschnittstelle 16 manuell auswählbar.

Auf welche der vorstehenden Arten die Festlegung des Ausgangswerts erfolgt, hängt letztlich vom jeweiligen Einzelfall ab und kann im Zusammenhang mit der vorliegenden beispielhaften Beschreibung des erfindungsgemäßen Verfahrens offen bleiben.

Der festgelegte Ausgangswert wird anschließend in einem dritten Nebenschritt 112 nach Maßgabe von Angaben bezüglich der Bodenbeschaffenheit, topografischer Eigenschaften einschließlich eines topografischen Verlaufs und/oder einer für einen aktuellen Betriebszustand des landwirtschaftlichen Traktors 10 optimalen Achslastverteilung modifiziert, wobei die entsprechenden Angaben in einem vierten, fünften und sechsten Nebenschritt 114, 116, 118 bereitgestellt werden.

Davon ausgehend wird der dem betreffenden Anbaugerät 36 beim Bearbeiten des Erdbodens entgegengesetzte Widerstand hinsichtlich der Berechnung der Sollzugleistung dahingehend präzisiert, ob die Bodenbeschaffenheit lehmig, weich, hart, steinig oder sandig ist, bzw. ob das Gelände einen ebenen, (steil) abschüssigen, (steil) ansteigenden oder welligen totgrafischen Verlauf aufweist, wohingegen die Einbeziehung der für den aktuellen Betriebszustand optimalen Achslastverteilung sicherstellt, dass der landwirtschaftliche Traktor 10 ein stabiles Fahrverhalten aufweist.

Hierbei wird die für den aktuellen Betriebszustand des landwirtschaftlichen Traktors 10 optimale Achslastverteilung im sechsten Nebenschritt 118 hinsichtlich eines beabsichtigten Straßen- oder Feldbetriebs, eines Antriebstyps des landwirtschaftlichen Traktors 10 und/oder eines Kupplungstyps der zur Anbringung des ausgewählten Anbaugeräts 36 vorgesehenen Anbaugerätekupplung 34 angepasst.

So ändert sich der Anlenk- bzw. Hebelpunkt des Anbaugeräts 36 gegenüber dem landwirtschaftlichen Traktor 10 je nach verwendetem Kupplungstyp, was entsprechende Auswirkungen auf die optimale Achslastverteilung des landwirtschaftlichen Traktors 10 hat. Auch im Falle einer Straßenfahrt auf befestigtem Untergrund oder Asphalt ergeben sich bezüglich der optimalen Achslastverteilung andere Anforderungen als während der Bearbeitung eines Felds. Hinsichtlich des Antriebstyps ist zudem zwischen landwirtschaftlichen Traktoren mit permanentem Zweiradantrieb (2WD), zuschaltbarem Allradantrieb (MFWD) und Allradantrieb unter Verwendung gleichgroßer Reifen (4WD) zu unterscheiden. Eine Übersicht über die insofern vorgesehenen optimalen Achslastverteilungen für die beiden Achsen 24, 30 des landwirtschaftlichen Traktors 10 gibt die nachfolgende Tabelle.

| Antriebstyp | Kupplungstyp | | | | | |
|---|---|---|---|---|---|---|
| | Kategorie A | | Kategorie B | | Kategorie C | |
| | Vorne | Hinten | Vorne | Hinten | Vorne | Hinten |
| 2WD | 25% | 75% | 30% | 70% | 35% | 65% |
| MFWD | 35% | 65% | 35% | 65% | 40% | 60% |
| 4WD | 55% | 45% | 55% | 45% | 60% | 40% |

In diesem Fall bezeichnet ein Kupplungstyp der Kategorie A ein Kupplungsmaul, eine Kupplungskugel (K50/K80) oder ein Zugpendel, ein Kupplungstyp der Kategorie B eine Zweipunktkupplung, und ein Kupplungstyp der Kategorie C eine Dreipunktkupplung in Gestalt eines Dreipunkt-Krafthebers.

Im Falle eines Straßenbetriebs werden die vorstehenden Achslastverteilungen zudem gegebenenfalls derart abgewandelt, dass der vorderen Achse 24 jeweils ein Anteil an der optimalen Achslastverteilung von 25% zukommt.

Die solchermaßen im ersten Hauptschritt 106 bestimmte Sollzugkraft wird in einem zweiten Hauptschritt 120 zur Berechnung der spezifischen Sollzugleistung herangezogen. Hierbei wird die spezifische Sollzugleistung von der Kontrolleinheit 14 unter Berücksichtigung einer spezifischen Bodenbearbeitungsgeschwindigkeit des ausgewählten Anbaugeräts 36 berechnet, wozu die achsweise bestimmte Sollzugkraft mit der spezifischen Bodenbearbeitungsgeschwindigkeit des betreffenden Anbaugeräts 36 multiplikativ verknüpft wird.

Die Informationen bezüglich der spezifischen Bodenbearbeitungsgeschwindigkeit des betreffenden Anbaugeräts 36 werden in einem siebten Nebenschritt 122 bereitgestellt. Die spezifische Bodenbearbeitungsgeschwindigkeit ergibt sich aus entsprechenden Vorgaben des Anbaugeräteherstellers und wird entweder durch direkte numerische Eingabe über die grafische Nutzerschnittstelle 16 oder aber selbsttätig anhand des jeweils ausgewählten Anbaugeräts 36 vorgegeben. In letzterem Fall wird auch hier das dem Anbaugerät 36 zugeordnete Identifikationsmittel 50 verwendet, wobei die Kontrolleinheit 14 ausgehend von dem identifizierten Anbaugerätemodell die zugehörige spezifische Bodenbearbeitungsgeschwindigkeit aus der in dem Datenspeicher 48 hinterlegten Anbaugerätedatenbank auswählt.

In einem dritten Hauptschritt 124 wird aus der spezifischen Sollzugleistung unter Zugrundelegung des als bekannt vorausgesetzten Traktionsvermögens zugehöriger Reifen 54, 56 für jede der beiden Achsen 24, 30 des landwirtschaftlichen Traktors 10 eine zur Übertragung der entsprechenden Antriebsleistung erforderliche Aufstandskraft und daraus unmittelbar der an der betreffenden Achse 24, 20 insoweit für die Achslast einzuhaltende Sollwert abgeleitet.

Bezüglich des als bekannt vorausgesetzten Traktionsvermögens der Reifen 54, 56 ist ein fester, für das betreffende Reifenmodell charakteristischer Wert vorgegeben. Alternativ wird das tatsächliche Traktionsvermögen von der Kontrolleinheit 14 in Abhängigkeit eines aktuellen Reifendrucks sowie des verwendeten Reifenmodells abgeleitet und der Berechnung des Sollwerts der Achslast zugrunde gelegt. Hierbei wird der Reifendruck bzw. das Reifenmodell gemäß Fig. 1 seitens eines in einen Reifenmantel eingebetteten RFID-Sensors 58, 60 in Gestalt entsprechender Fülldruck- bzw. Identifikationsinformationen bereitgestellt, wobei diese mittels des RFID-Lesegeräts 40 drahtlos ausgelesen sowie an die Kontrolleinheit 14 übertragen werden. Neben einer sensorischen Bereitstellung ist zudem die Möglichkeit einer manuellen Eingabe des Reifendrucks bzw. des Reifenmodells über die mit der Kontrolleinheit 14 in Verbindung stehende grafische Nutzerschnittstelle 16 gegeben.

### Ermittlung des Istwerts der Achslast

Synchron zum ersten Verfahrenszweig 102 wird im zweiten Verfahrenszweig 104 der die aktuelle Achslast wiedergebende Istwert ermittelt.

Dies erfolgt in einem vierten Hauptschritt 126 auf Grundlage einer an der Anbaugerätekupplung 34 durch sensorische Erfassung der Kraft- und Hebelverhältnisse abgeleiteten Masse und/oder Schwerpunktlage des Anbaugeräts 36. Für den Sonderfall einer als Dreipunkt-Kraftheber ausgebildeten Anbaugerätekupplung 34 sei diesbezüglich auf das in DE 10 2016 207 205 A1 beschriebene Verfahren hingewiesen. Zur Ermittlung des jeweiligen Istwerts der Achslast ist dann noch die Kenntnis der Masse und/oder Schwerpunktlage des landwirtschaftlichen Traktors 10 notwendig. Die entsprechenden Angaben sind für das betreffende Traktormodell fest vorgegeben und in Form eines zugehörigen Traktordatensatzes in dem Datenspeicher 48 hinterlegt. Zusätzlich besteht die Möglichkeit, diese über die grafische Nutzerschnittstelle 16 zum Zweck der Berücksichtigung bereits angebrachter Zusatzgewichte anzupassen.

Ferner wird in einem fünften Hauptschritt 128 der Istwert der Achslast für jede der beiden Achsen 24, 30 redundant auf Grundlage einer typspezifischen, mithin fest vorgegebenen Masse und/oder Schwerpunktlage des Anbaugeräts 36 unter Einbeziehung der für das ausgewählte Anbaugerät 36 spezifischen Sollzugleistung ermittelt. Die Angaben bezüglich Masse und/oder Schwerpunktlage des Anbaugeräts 36 werden der in dem Datenspeicher 48 hinterlegten Anbaugerätedatenbank entnommen, wohingegen im Zusammenhang mit der Bestimmung der spezifischen Sollzugleistung auf das Ergebnis der im zweiten Hauptschritt 120 durchgeführten Berechnung zurückgegriffen wird. Die Ermittlung des Istwerts der Achslast erfolgt auch hier unter zusätzlicher Einbeziehung der Masse und/oder Schwerpunktlage des landwirtschaftlichen Traktors 10, wobei die entsprechenden Angaben fest vorgegeben sind und dem in dem Datenspeicher 48 hinterlegten Traktordatensatz entnommen werden.

Genauer gesagt wird im fünften Hauptschritt 128 zunächst in Abhängigkeit der fest vorgegebenen Masse und Schwerpunktlage des landwirtschaftlichen Traktors 10 für jede der beiden Achsen 24, 30 ein Ausgangswert der Achslast für den Fall eines Straßen- sowie eines Feldbetriebs bei angebrachtem Anbaugerät 36 bestimmt. Ausgehend von diesem statischen Ausgangswert wird unter Einbeziehung der für das ausgewählte Anbaugerät 36 spezifischen Sollzugleistung eine dynamische Verschiebung des statischen Ausgangswerts ermittelt. Der solchermaßen gewonnene Ausgangswert bildet dann den Istwert der Achslast an der betreffenden Achse 24, 20.

In einem sechsten Hauptschritt 130 wird eine Plausibilitätsprüfung der im vierten und fünften Hauptschritt 126, 128 für die Achslast unabhängig ermittelten Istwerte durchgeführt, wobei von der Kontrolleinheit 14 über die grafische Nutzerschnittstelle 16 eine Fehlermeldung ausgegeben wird, sofern die Plausibilitätsprüfung das Vorliegen einer unzulässigen Abweichung zwischen den für die Achslast ermittelten Istwerten ergibt. Dies ist dann der Fall, wenn die Abweichung einer Massedifferenz von mehr als 100 kg entspricht.

Die Plausibilitätsprüfung dient im vorliegenden Fall der Verifizierung des im vierten Hauptschritt 126 für die Achslast ermittelten Istwerts, wobei dieser im Falle eines positiven Prüfungsergebnisses in einem siebten Hauptschritt 132 mit dem im dritten Hauptschritt 124 für die Achslast ermittelten Sollwert der Achslast verglichen wird, was für jede der beiden Achsen 24, 30 separat erfolgt. Ausgehend von dem Vergleichsergebnis wird in einem achten Hauptschritt 134 eine zur Einhaltung des jeweiligen Sollwerts erforderliche achsweise Ballastierung berechnet und in Gestalt eines zugehörigen Ballastierungsvorschlags über die grafische Nutzerschnittstelle 16 ausgegeben, wozu diese seitens der Kontrolleinheit 14 entsprechend angesteuert wird. Die Ausgabe des Ballastierungsvorschlags wird - soweit dies im Rahmen der zulässigen Höchstachslasten möglich ist - im Sinne der gleichzeitigen Einhaltung der für den aktuellen Betriebszustand des landwirtschaftlichen Traktors 10 optimalen Achslastverteilung gemäß des sechsten Nebenschritts 118 modifiziert.

Der durch Vergleich mit dem Istwert der Achslast gewonnene Ballastierungsvorschlag kann dann vom Nutzer durch Anbringen bzw. Abnehmen entsprechender Zusatzgewichte (z.B. Radzusatzgewichte, Front- bzw. Heckgewichte) ohne Weiteres umgesetzt werden, wobei bereits angebrachte Zusatzgewichte im Rahmen des Ballastierungsvorschlags mitberücksichtigt werden, da letztere ihren Eingang in den für die Achslast ermittelten Istwert finden.

In einem neunten Hauptschritt 136 wird ferner eine Reifendruckempfehlung in Abhängigkeit der sich unter Berücksichtigung des Ballastierungsvorschlags ergebenden Achslasten ausgegeben. Zusätzlich/oder alternativ wird die Reifenfüllanlage 38 von der Kontrolleinheit 14 automatisiert in Abhängigkeit der ausgegebenen Reifendruckempfehlung angesteuert.

Anschließend wird das erfindungsgemäße Verfahren in einem Schlussschritt 138 beendet.

## Patentansprüche

1. Verfahren zur Bereitstellung eines Ballastierungsvorschlags eines landwirtschaftlichen Traktors, bei dem für jede der Achsen (24, 30) des landwirtschaftlichen Traktors (10) unter Berücksichtigung einer spezifischen Bodenbearbeitungsgeschwindigkeit des ausgewählten Anbaugeräts (36) eine für ein ausgewähltes Anbaugerät (36) spezifische Sollzugleistung durch multiplikative Verknüpfung einer zum Betreiben des ausgewählten Anbaugeräts (36) erforderlichen Sollzugkraft mit der spezifischen Bearbeitungsgeschwindigkeit berechnet wird, wobei in Abhängigkeit der berechneten Sollzugleistung unter Zugrundelegung des Traktionsvermögens zugehöriger Reifen für jede der Achsen (24, 30) des landwirtschaftlichen Traktors eine zur Übertragung einer der berechneten Sollzugleistung entsprechenden Antriebsleistung erforderliche Aufstandskraft und daraus ein an der betreffenden Achse (24, 30) einzuhaltender Sollwert für eine Achslast abgeleitet und mit einem für die Achslast ermittelten Istwert verglichen wird, wobei ausgehend von dem Vergleichsergebnis eine zur Einhaltung des Sollwerts erforderliche achsweise Ballastierung berechnet und in Gestalt eines zugehörigen Ballastierungsvorschlags ausgegeben wird, wobei für die erforderliche Sollzugkraft ein für das jeweils ausgewählte Anbaugerät (36) charakteristischer Ausgangswert festgelegt wird, der nach Maßgabe von Angaben bezüglich der Bodenbeschaffenheit und/oder topografischer Eigenschaften einschließlich eines topografischen Verlaufs modifiziert wird.

2. Verfahren nach Anspruch 1, **dadurch gekennzeichnet, dass** zur redundanten Festlegung des Ausgangswerts eine Kategorisierung in Relation zur maximal zur Verfügung stehenden Zugkraft des landwirtschaftlichen Traktors (10) durchgeführt wird.

3. Verfahren nach Anspruch 1 oder 2, **dadurch gekennzeichnet, dass** der festgelegte Ausgangswert nach Maßgabe von Angaben bezüglich einer für einen aktuellen Betriebszustand des landwirtschaftlichen Traktors (10) optimalen Achslastverteilung modifiziert wird.

4. Verfahren nach Anspruch 3, **dadurch gekennzeichnet, dass** die für den aktuellen Betriebszustand des landwirtschaftlichen Traktors (10) optimale Achslastverteilung hinsichtlich eines beabsichtigten Straßen- oder Feldbetriebs, eines Antriebstyps des landwirtschaftlichen Traktors (10) und/oder eines Kupplungstyps einer zur Anbringung des ausgewählten Anbaugeräts (36) vorgesehenen Anbaugerätekupplung (34) angepasst wird.

5. Verfahren nach wenigstens einem der Ansprüche 1 bis 4,
**dadurch gekennzeichnet, dass** der Istwert der Achslast auf Grundlage einer an der Anbaugerätekupplung (34) durch sensorische Erfassung der Kraft- und Hebelverhältnisse abgeleiteten Masse und/oder Schwerpunktlage des Anbaugeräts (36) ermittelt wird.

6. Verfahren nach Anspruch 5, **dadurch gekennzeichnet, dass** der Istwert der Achslast redundant auf Grundlage einer typspezifischen Masse und/oder Schwerpunktlage des Anbaugeräts (36) unter Einbeziehung der für das ausgewählte Anbaugerät (36) spezifischen Sollzugleistung ermittelt wird.

7. Verfahren nach Anspruch 3 und 5, **dadurch gekennzeichnet, dass** eine Plausibilitätsprüfung der für die Achslast ermittelten Istwerte durchgeführt wird, wobei eine Fehlermeldung ausgegeben wird, sofern die Plausibilitätsprüfung das Vorliegen einer unzulässigen Abweichung zwischen den für die Achslast ermittelten Istwerten ergibt.

8. Verfahren nach wenigstens einem der Ansprüche 1 bis 7, **dadurch gekennzeichnet, dass** die Ausgabe des Ballastierungsvorschlags im Sinne der gleichzeitigen Einhaltung einer für den aktuellen Betriebszustand des landwirtschaftlichen Traktors (10) optimalen Achslastverteilung modifiziert wird.

9. Verfahren nach wenigstens einem der Ansprüche 1 bis 8, **dadurch gekennzeichnet, dass** eine Reifendruckempfehlung in Abhängigkeit von sich unter Berücksichtigung des Ballastierungsvorschlags ergebenden Achslasten ausgegeben wird.

10. Verfahren nach Anspruch 9, **dadurch gekennzeichnet, dass** eine Reifenfüllanlage (38) automatisiert in Abhängigkeit der ausgegebenen Reifendruckempfehlung angesteuert wird.

## Claims

1. Method for providing a ballasting proposal for an agricultural tractor, in which method a target tractive power specific to a selected implement (36) is calculated by multiplying a target tractive force that is required for operating the selected implement (36) by the specific cultivation speed for each of the axles (24, 30) of the agricultural tractor (10), taking into account a specific soil cultivation speed of the selected implement (36), wherein, depending on the calculated target tractive power on the basis of the tractive capacity of associated tyres, a contact force that is required for transmitting a drive power corresponding to the calculated target tractive power and, from this contact force, a target value for an axle load, which target value is to be maintained on the axle (24, 30) in question, are derived for each of the axles (24, 30) of the agricultural tractor and the target value is compared with an actual value that is ascertained for the axle load, wherein, based on the comparison result, ballasting for each axle that is required for maintaining the target value is calculated and output in the form of an associated ballasting proposal, wherein a starting value that is characteristic of the respectively selected implement (36) is defined for the required target tractive force, the starting value being modified in accordance with information relating to the soil condition and/or topographical properties including a topographical profile.

2. Method according to Claim 1, **characterized in that** categorization in relation to the maximum available tractive force of the agricultural tractor (10) is carried out for redundantly defining the starting value.

3. Method according to Claim 1 or 2, **characterized in that** the defined starting value is modified in accordance with information relating to an axle load distribution that is optimal for a current operating state of the agricultural tractor (10).

4. Method according to Claim 3, **characterized in that** the axle load distribution that is optimal for the current operating state of the agricultural tractor (10) is adjusted in respect of intended road or field operation, a drive type of the agricultural tractor (10) and/or a coupling type of an implement coupling (34) provided for attaching the selected implement (36).

5. Method according to at least one of Claims 1 to 4, **characterized in that** the actual value of the axle load is ascertained on the basis of a mass and/or centre of gravity position of the implement (36) that are/is derived from the implement coupling (34) by detection of the force and lever ratios using sensors.

6. Method according to Claim 5, **characterized in that** the actual value of the axle load is ascertained redundantly on the basis of a type-specific mass and/or centre of gravity position of the implement (36) including the target tractive power specific to the selected implement (36).

7. Method according to Claims 3 and 5, **characterized in that** a plausibility check of the actual values that are ascertained for the axle load is carried out, wherein a fault message is output if the plausibility check shows the presence of an impermissible deviation between the actual values that are ascertained for the axle load.

8. Method according to at least one of Claims 1 to 7, **characterized in that** the output of the ballasting proposal for the purpose of simultaneously maintaining an axle load distribution that is optimal for the current operating state of the agricultural tractor (10) is modified.

9. Method according to at least one of Claims 1 to 8, **characterized in that** a tyre pressure recommendation is output depending on axle loads that arise taking into account the ballasting proposal.

10. Method according to Claim 9, **characterized in that** a tyre filling system (38) is activated in an automated manner depending on the tyre pressure recommendation that is output.

## Revendications

1. Procédé permettant de fournir une proposition de lestage d'un tracteur agricole, dans lequel, pour chacun des essieux (24, 30) du tracteur agricole (10), en tenant compte d'une vitesse de travail du sol spécifique de l'outil porté sélectionné (36), une puissance de traction théorique spécifique à un outil porté sélectionné (36) est calculée par une combinaison par multiplication d'une force de traction théorique nécessaire au fonctionnement de l'outil porté sélectionné (36) par la vitesse de travail spécifique, dans lequel en fonction de la puissance de traction théorique calculée, en se basant sur la capacité de traction des pneus associés pour chacun des essieux (24, 30) du tracteur agricole, une force d'appui nécessaire à la transmission d'une puissance d'entraînement correspondant à la puissance de traction théorique calculée, et à partir de celle-ci une valeur théorique à respecter au niveau de l'essieu (24, 30) en question sont dérivées pour une charge par essieu et comparées avec une valeur réelle déterminée pour la charge par essieu, dans lequel en partant du résultat de comparaison, un lestage par essieu, nécessaire au respect de la valeur théorique, est calculé et sorti sous la forme d'une proposition de lestage associée, dans lequel pour la force de traction théorique nécessaire, une valeur initiale caractéristique de l'outil porté (36) respectivement sélectionné est définie qui est modifiée conformément à des indications concernant la nature du sol et/ou des propriétés topographiques, y compris un tracé topographique.

2. Procédé selon la revendication 1, **caractérisé en ce qu'**une classification en relation avec la force de traction du tracteur agricole (10), disponible au maximum, est effectuée pour la définition redondante de la valeur initiale.

3. Procédé selon la revendication 1 ou 2, **caractérisé en ce que** la valeur initiale définie est modifiée conformément à des indications concernant une distribution de charge par essieu optimale pour un état de fonctionnement actuel du tracteur agricole (10).

4. Procédé selon la revendication 3, **caractérisé en ce que** la distribution de charge par essieu optimale pour l'état de fonctionnement actuel du tracteur agricole (10) est adaptée en fonction d'un fonctionnement sur route ou sur le terrain envisagé, d'un type d'entraînement du tracteur agricole (10) et/ou d'un type d'accouplement d'un accouplement d'outil porté (34) prévu pour installer l'outil porté sélectionné (36).

5. Procédé selon au moins l'une des revendications 1 à 4, **caractérisé en ce que** la valeur réelle de la charge par essieu est déterminée sur la base d'une masse et/ou d'une position de centre de gravité de l'outil porté (36), dérivée au niveau de l'accouplement d'outil porté (34) par une détection par capteur des rapports de forces et de leviers.

6. Procédé selon la revendication 5, **caractérisé en ce que** la valeur réelle de la charge par essieu est déterminée de manière redondante sur la base d'une masse et/ou d'une position de centre de gravité spécifiques au type de l'outil porté (36) en intégrant la puissance de traction théorique spécifique pour l'outil porté sélectionné (36).

7. Procédé selon la revendication 3 et 5, **caractérisé en ce qu'**un contrôle de plausibilité est effectué pour les valeurs réelles déterminées pour la charge par essieu, dans lequel un message d'erreur est sorti dans la mesure où le contrôle de plausibilité aboutit à la présence d'un écart inadmissible entre les valeurs réelles déterminées pour la charge par essieu.

8. Procédé selon au moins l'une des revendications 1 à 7, **caractérisé en ce que** la sortie de la proposition de lestage est modifiée dans le sens du respect simultané d'une distribution de charge par essieu optimale pour l'état de fonctionnement actuel du tracteur agricole (10).

9. Procédé selon au moins l'une des revendications 1 à 8, **caractérisé en ce qu'**une recommandation de pression des pneus est sortie en fonction des charges par essieu résultantes en tenant compte de la proposition de lestage.

10. Procédé selon la revendication 9, **caractérisé en ce qu'**un système de gonflage des pneus (38) est piloté de manière automatisée en fonction de la recommandation de pression des pneus sortie.
